Europäisches Patentamt

European Patent Office

Office européen des brevets

(19)

(11) Numéro de publication : **0 122 903**
**B1**

(12) **FASCICULE DE BREVET EUROPÉEN**

(45) Date de publication du fascicule du brevet :
04.03.87

(51) Int. Cl.⁴ : **A 01 D 34/63**, A 01 D 34/74

(21) Numéro de dépôt : **84870036.5**

(22) Date de dépôt : **14.03.84**

(54) Tondeuse à gazon à cônes.

(30) Priorité : **15.03.83 BE 55253**

(43) Date de publication de la demande :
**24.10.84 Bulletin 84/43**

(45) Mention de la délivrance du brevet :
**04.03.87 Bulletin 87/10**

(84) Etats contractants désignés :
**DE FR GB IT LU NL**

(56) Documents cités :
**BE-A- 886 946**
**FR-A- 2 423 969**
**US-A- 3 255 577**
**US-A- 4 395 865**

(73) Titulaire : **COCKERILL SAMBRE Société Anonyme
dite:**
**Avenue Adolphe Greiner, 1**
**B-4100 Liege (Seraing) (BE)**

(72) Inventeur : **Hallez, Michel**
**99 avenue Meurée**
**B-6001 Marcinelle (BE)**

(74) Mandataire : **Vanderperre, Robert et al**
**Bureau VANDER HAEGHEN 63 Avenue de la Toison
d'Or**
**B-1060 Bruxelles (BE)**

Jouve, 18, rue St-Denis, 75001 Paris, France

## Description

La présente invention a trait à une tondeuse à gazon dite à cônes, c'est-à-dire dont le dispositif de coupe comprend des cônes lisses ou porteurs de couteaux, mis en rotation de manière à couper l'herbe et à la canaliser, cette tondeuse comprenant en outre les autres caractéristiques mentionnées dans le préambule de la revendication 1.

Une tondeuse à cônes est connue par la publication BE-A-886946. La machine décrite dans ce document comprend des cônes de coupe rotatifs disposés à l'avant de la tondeuse et des moyens pour ramasser l'herbe coupée et la transporter vers un bac de collecte. Les moyens pour ramasser et transporter l'herbe coupée sont constitués d'une courroie transporteuse à raclettes ou à godets. Cette courroie transporteuse n'assure guère le ramassage de l'herbe coupée de façon efficace en toutes circonstances, notamment lorsque l'herbe est mouillée et lorsque le terrain présente une surface avec des irrégularités. De plus, n'étant pas équipée d'un dispositif de réglage automatique de la hauteur de coupe, cette tondeuse connue n'assure pas une coupe rigoureusement égale sur un terrain irrégulier.

Ces conditions de travail sont particulièrement critiques pour des terrains de grande superficie, par exemple les terrains de golf.

L'invention est particulièrement étudiée pour de telles applications. En bref, pour ces utilisations, la tondeuse à gazon doit satisfaire à un certain nombre de critères généraux, à savoir :

réaliser une hauteur de coupe aussi régulière que possible en s'accommodant des irrégularités du terrain ;

effectuer l'opération en un temps acceptable, avec un minimum de corrections ou de réglage de la machine et un minimum de passages ;

rassembler et évacuer l'herbe coupée, le tout étant si possible réalisé lors du passage de coupe et non lors d'un passage ultérieur ;

être apte à opérer sur de l'herbe mouillée.

La présente invention apporte une solution qui satisfait aux critères précités grâce à une tondeuse à gazon à cônes dans laquelle les moyens de collecte et de transport de l'herbe coupée comprennent deux courroies transporteuses dont les déplacements sont synchronisés et sensiblement parallèles, ces courroies étant disposées de telle sorte que l'herbe introduite à une extrémité du dispositif à proximité des cônes de coupe par l'intermédiaire d'un béquet formé d'une tôle pliée sur laquelle passe une des courroies, soit transportée pratiquement horizontalement vers l'arrière de la machine, puis élevée sensiblement verticalement par un effet de pinçage entre les deux courroies et non par bourrage ou poussée, puis enfin déversée dans un dispositif de collecte.

Selon l'invention, la tondeuse comprend également des moyens pour positionner automatiquement les cônes de coupe par rapport au sol et déterminer la hauteur de coupe, ces moyens comprenant un vérin à double effet relié au châssis principal et agissant sur un châssis secondaire, un cadre rendu solidaire par le biais d'une articulation à axe horizontal autour duquel il peut pivoter et un système de chaînes de suspension reliant ledit cadre et le système de cônes de coupe afin d'ajuster le mouvement vertical du système de cônes en une seule opération de manière à régler automatiquement la hauteur de coupe en fonction de l'état du sol.

Des moyens sont encore prévus pour corriger la hauteur de coupe, ces moyens comprenant un dispositif agissant sur le vérin à double effet, de telle sorte que la pression au sol exercée par le système de cônes et mesurée par le biais de roues ou de patins reliés au cadre soit inférieure à une valeur déterminée selon l'état du sol, de manière à éviter l'enfoncement des roues ou patins précités, avec pour conséquence la variation de la hauteur de coupe.

La tondeuse à gazon selon l'invention présente les avantages suivants :

elle a une largeur de coupe pouvant être étendue jusqu'à 1,80 m ;

elle travaille même avec de l'herbe mouillée, vu l'absence de système destiné à redresser celle-ci et qui s'avère souvent inefficace dans le cas présent ;

elle est apte à respecter une hauteur de coupe constante ;

elle coupe, collecte et évacue l'herbe en un seul passage ;

elle ne nécessite que des réglages simples, rapides et pouvant être accomplis par une seule personne.

L'invention est exposée plus en détails dans ce qui suit avec référence aux dessins ci-annexés qui illustrent un mode d'exécution exemplaire, non à l'échelle. Dans ces dessins :

la figure 1 est une vue en plan du dispositif de coupe,

la figure 2 est une vue en élévation du dispositif de collecte et d'évacuation de l'herbe,

la figure 3 est une vue d'ensemble d'une tondeuse selon l'invention.

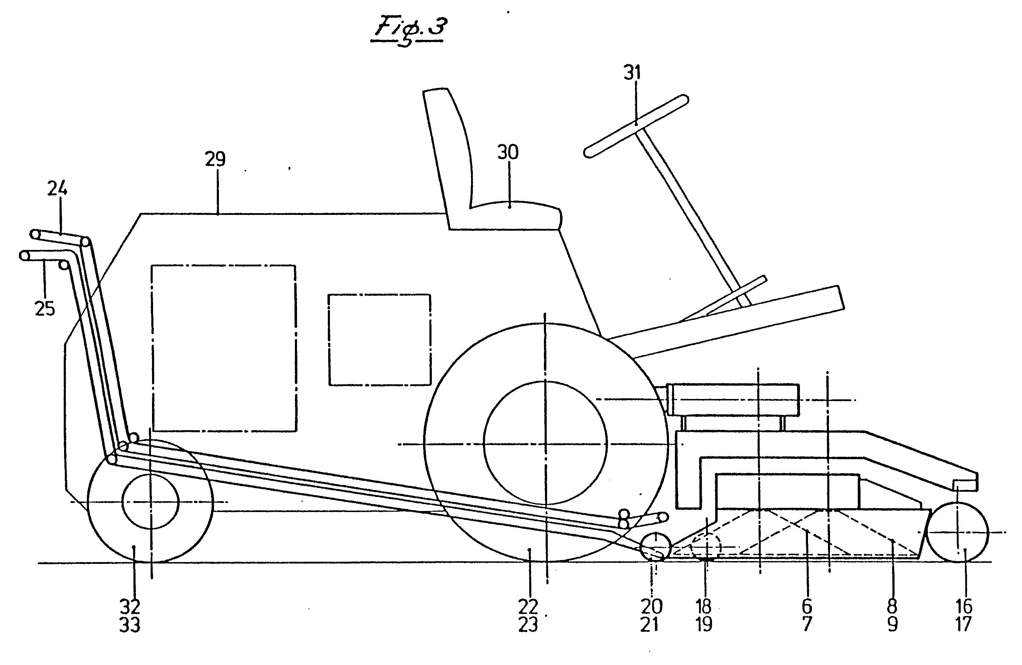

Se reportant d'abord à la vue d'ensemble montrée à la figure 3, on voit la carrosserie 29 de la tondeuse, le siège du conducteur 30, les organes de direction 31, les roues portantes 22, 23, 32, 33 et des roues 16, 17, 18, 19, 20, 21 qui servent à mesurer la pression au sol. L'engin comprend quatre cônes de coupe identifiés par les références numériques 6, 7, 8 et 9. Le dispositif de collecte et de transport de l'herbe coupée est identifié par les références numériques 24, 25 et 26.

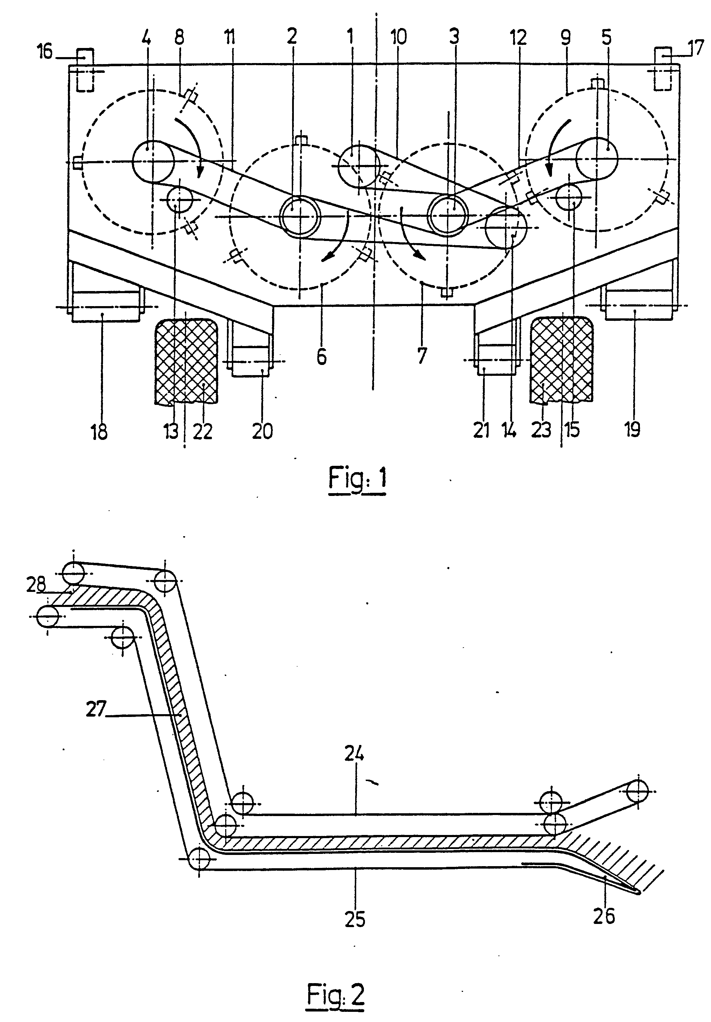

Le dispositif de coupe est représenté en particulier à la figure 1. Il comprend les cônes de coupe rotatifs 6, 7, 8 et 9. La rotation de ces cônes est commandée par un moteur hydraulique 1 au moyen des poulies 2, 3, 4 et 5, de la courroie crantée 10 et des courroies 11 et 12. La courroie 10 entraîne les poulies 2 et 3 couplées aux deux cônes 6 et 7 les plus proches de l'axe des roues portantes 22 et 23. Les courroies 11 et 12 transmettent le mouvement aux poulies 4 et 5 couplées aux cônes 8 et 9 les plus éloignés de l'axe des roues. Les références 13, 14 et 15 désignent des poulies de transfert. Les références 16, 17, 18, 19, 20 et 21 désignent des roues destinées aux mesures de pression au sol.

La figure 2 montre le dispositif de collecte et de transport de l'herbe. Ce dispositif comprend deux courroies transporteuses 24 et 25 qui se déplacent pratiquement parallèlement entre elles sur la majeure partie de leur longueur et en synchronisme. Ces courroies sont disposées de telle sorte que l'herbe, introduite entre elles à une extrémité du dispositif située à proximité des cônes de coupe par l'intermédiaire d'un béquet 26 formé d'une tôle pliée autour de laquelle passe la courroie inférieure 25, soit transportée entre les courroies d'abord pratiquement horizontalement vers l'arrière de la machine, puis élevée sensiblement verticalement dans la zone 27 principalement par un effet de pinçage entre les deux courroies, mais non par bourrage ou poussée. A l'extrémité élevée 28, l'herbe se trouve déversée dans un bac de collecte.

La propulsion de la machine est assurée par un ou plusieurs moteurs hydrauliques, de préférence un moteur hydraulique couplé à chaque roue supportant le châssis principal.

## Revendications

1. Tondeuse à gazon à cônes comprenant un châssis principal en contact avec le sol par l'intermédiaire de moyens de support mobiles tels que des roues (22, 23, 32, 33), des cônes de coupe rotatifs (6, 7, 8, 9) à axe de rotation vertical, ces cônes étant situés en avant de la tondeuse par rapport aux moyens de support mobiles des moyens pour positionner lesdits cônes par rapport au sol et déterminer la hauteur de coupe, des moyens pour entraîner les cônes de coupe en rotation, et des moyens pour collecter l'herbe coupée et la transporter vers un dispositif de collecte, caractérisée en ce que les moyens de collecte et de transport de l'herbe coupée comprennent deux courroies transporteuses (24, 25) dont les déplacements sont synchronisés et sensiblement parallèles, ces courroies étant disposées de telle sorte que l'herbe introduite à une extrémité du dispositif à proximité des cônes de coupe (6, 7) par l'intermédiaire d'un béquet (26) formé d'une tôle pliée autour sur laquelle passe une des courroies, soit transportée pratiquement horizontalement vers l'arrière de la machine, puis élevée sensiblement verticalement principalement par un effet de pinçage entre les deux courroies (27) et non par bourrage ou poussée, puis enfin déversée dans un dispositif de collecte.

2. Tondeuse à gazon suivant la revendication 1, caractérisée en ce que les moyens pour positionner les cônes (6-9) par rapport au sol et déterminer la hauteur de coupe comprennent un vérin à double effet relié au châssis principal et agissant sur un châssis secondaire, un cadre rendu solidaire du châssis secondaire par le biais d'une articulation à axe horizontal autour duquel il peut pivoter et un système de chaînes de suspension reliant ledit cadre et le système de cônes de coupe afin d'ajuster le mouvement vertical du système de cônes en une seule opération de manière à régler automatiquement la hauteur de coupe en fonction de l'état du sol.

3. Tondeuse à gazon suivant l'une ou l'autre des revendications 1 et 2, caractérisée en ce que les moyens pour corriger la hauteur de coupe comprennent un dispositif agissant sur le vérin à double effet, de telle sorte que la pression au sol exercée par le système de cônes et mesurée par le biais de roues (16-21) ou de patins reliés au cadre soit inférieure à une valeur déterminée selon l'état du sol, de manière à éviter l'enfoncement des roues ou patins précités, avec pour conséquence la variation de la hauteur de coupe.

4. Tondeuse à gazon à cônes suivant l'une quelconque des revendications précédentes, caractérisée en ce que la propulsion de la machine est assurée par un ou plusieurs moteurs hydrauliques, de préférence un moteur hydraulique couplé à chaque roue supportant le châssis principal.

## Claims

1. A cone type lawn mower comprising a main frame in contact with the ground by way of moving support means such as wheels (22, 23, 32, 33), rotary cutting cones (6-9) whose axes of rotation are vertical and which are disposed at the front of the mower relatively to the moving support means, means for positioning the cones relatively to the ground and to determine cutting height, means for rotating the cutting cones, and means for collecting the mowings and conveying them to a collecting facility, characterised in that the means for collecting and conveying the mowings comprise two conveyor belts (24, 25) which move in synchronism and substantially parallel to one another and which are so disposed that the grass introduced at one end of the device near the cutting cones (6, 7) by way of a skid (26) formed by a bent sheet of metal around which one of the belts runs is conveyed substantially horizontally to the rear of the machine, then raised substantially vertically mainly by a clamping effect between the two belts (27) and not by cramming or thrusting, then finally discharged into a collecting facility.

2. A mower according to claim 1, characterised in that the means for positioning the cones (6-9) relatively to the ground and determining the height of cut comprise a double-acting reciprocating actuator connected to the main frame and acting on a secondary frame, a framework rigidly connected to the secondary frame by way of a horizontal-axis articulation around which it can pivot, and a system of suspension chains connecting the framework to the system of cutting cones for adjustment of the vertical movement thereof in a single step so as to adjust cutting height automatically in dependence upon the condition of the ground.

3. A mower according to claim 1 and/or 2, characterised in that the means for correcting the height of cut comprise means acting on the double-acting actuator so that the pressure applied to the ground by the cone system and measured by means of wheels (16-21) or skids connected to the framework is less than a value determined in accordance with the condition of the ground so as to prevent the wheels or skids from digging into the ground with the result of the height of cut varying.

4. A mower according to any of the previous claims, characterised in that the machine is driven by one or more hydraulic motors, preferably a hydraulic motor coupled with each wheel carrying the main frame.

### Patentansprüche

1. Rasenmäher mit Kegeln mit einem Hauptrahmen, der mittels bewegbarer Stützeinrichtungen wie Räder (22, 23, 32, 33) mit dem Boden in Berührung steht, drehbaren Schneidkegeln (6, 7, 8, 9) mit vertikaler Drehachse, wobei die Kegel, die vor dem Rasenmäher angeordnet sind, bezüglich der bewegbaren Stützeinrichtungen Einrichtungen zu ihrer Positionierung gegenüber dem Boden und zum Festlegen der Schnitthöhe haben, ferner mit Einrichtungen zum Drehen der Kegel und mit Einrichtungen zum Sammeln und Transportieren des geschnittenen Grases zu einer Sammeleinrichtung, dadurch gekennzeichnet, daß die Einrichtungen zum Sammeln und Transportieren des geschnittenen Grases zwei Förderbänder (24, 25) aufweisen, deren Lauf synchronisiert ist und im wesentlichen parallel verläuft, und daß die Förderbänder so angeordnet sind, daß das Gras, das an einem Ende der Einrichtung in der Nähe der Schneidkegel (6, 7) mittels eines Blattes (26), das durch ein umgebogenes Blech gebildet und um das eines der Förderbänder geführt ist, eingeführt ist, praktisch horizontal zur Rückseite der Maschine transportiert und dann im wesentlichen vertikal, hauptsächlich durch das Einklemmen zwischen den beiden Förderbändern (27) und nicht durch Stopfen oder Drücken, geführt wird, woraufhin das Gras in die Sammeleinrichtung abgegeben wird.

2. Rasenmäher nach Anspruch 1, dadurch gekennzeichnet, daß die Einrichtungen zum Positionieren der Kegel (6-9) gegenüber dem Boden und zum Festlegen der Schnitthöhe eine doppelt wirkende Winde, die mit dem Hauptrahmen verbunden ist und auf einen Nebenrahmen einwirkt, ein Gestell, das durch eine Gelenkverbindung mit horizontaler Achse, um das es schwenkbar ist, mit dem Nebenrahmen verbunden ist, und ein Kettenaufhängungssystem aufweist, das mit dem Gestell und den Schneidkegeln zum Einstellen der vertikalen Bewegung der Schneidkegel in einem einzigen Arbeitsgang verbunden ist, so daß die Schneidhöhe in Abhängigkeit von dem Zustand des Bodens automatisch einstellbar ist.

3. Rasenmäher nach Anspruch 1 oder 2, dadurch gekennzeichnet, daß die Einrichtung zum Korrigieren der Schneidhöhe eine Einrichtung aufweist, die auf die doppelt wirkende Winde so einwirkt, daß der von den Kegeln auf den Boden ausgeübte Druck, der durch die Räder (16-21) oder durch mit dem Gestell verbundene Kufen gemessen wird, unterhalb eines Wertes liegt, der entsprechend dem Zustand des Bodens festgelegt ist, so daß ein vorangegangenes Eindringen der Räder oder Kufen mit der Folge beseitigt ist, daß die Schneidhöhe geändert ist.

4. Rasenmäher nach einem der vorhergehenden Ansprüche, dadurch gekennzeichnet, daß der Antrieb der Maschine durch einen oder mehrere hydraulische Motoren gebildet ist, wobei vorzugsweise ein hydraulischer Motor mit jedem Stützrad des Hauptrahmens gekoppelt ist.

Fig. 1

Fig. 2

_Fig.3_